# EUROPEAN PATENT APPLICATION

(11) **EP 4 804 426 A1**
(43) Date of publication of application: **09.09.2026**
(21) Application number: 26155668.2
(22) Date of filing: 02.02.2026
(51) Int. Cl.: H04B 7/185, G06F 1/16, H04B 1/3827

(54) **WEARABLE COMPUTING DEVICE ALIGNMENT ASSISTANCE FOR NON-TERRESTRIAL COMMUNICATIONS**

(30) Priority: 05.03.2025 US 202519071329
(71) Applicant: Google LLC, Mountain View, CA 94043 (US)
(72) Inventor: Dabish, Dominic, Mountain View California, 94043 (US); Nakano, Aiko, Mountain View California, 94043 (US); Sung, Alexander Ying, Mountain View California, 94043 (US); Erakovic, Davor, Kitchener Ohio, N2H 5G5 (CA); Pellouchoud, Philip, Mountain View California, 94043 (US); Ananth, Sharath, Mountain View California, 94043 (US); Pandith, Ashwin, Mountain View California, 94043 (US); Hoe, Francis Boon Hock, Mountain View California, 94043 (US); Gulia, Nidhi, Mountain View California, 94043 (US); Laskar, Supratim, Mountain View California, 94043 (US)
(74) Representative: Collingwood-Pierce, Alexandra Isobel Seymour

(57) **Abstract**

A wearable computing device may receive a request to connect the wearable computing device to a non-terrestrial communication network. The computing device may identify a particular satellite associated with the non-terrestrial communication network. The computing device may determine a target orientation of the wearable computing device that includes a target azimuth of the wearable computing device and a target altitude of the wearable computing device. The computing device may output a graphical user interface that includes a first set of visual elements that are indicative of one or more of the target azimuth of the wearable computing device relative to a current azimuth of an arm of the wearer of the wearable computing device, or the target altitude of the wearable computing device relative to a current altitude of the arm of the wearer of the wearable computing device. The computing device may transmit data to the particular satellite.

## Description

### BACKGROUND

Wearable computing devices, such as so-called smartwatches, fitness trackers, and the like may include one or more various wireless radios, transceivers, and antennas for establishing wireless communications with separate communications networks, including telephony networks, internet protocol (IP) based networks such as the public Internet, private networks, and satellite communications networks, via which the wearable computing devices receive and transmit data. The various transceivers and antennas may be configured as built-in modules integrated into the wearable computing device or may optionally be externally configured components connected with the wearable computing device via, for example, an externally facing data communications bus built into the wearable computing device and configured to communicate with external peripheral devices.

### SUMMARY

In general, this disclosure is directed to wearable computing devices that include non-terrestrial communication capabilities (e.g., satellite communication) and provide a user interface to align a body part of a wearer on which the wearable computing device is worn with one or more satellites or other type of non-terrestrial device equipped with a transceiver (e.g., high-altitude balloons, aircraft, unmanned aerial vehicles (UAVs), spacecraft, etc.). When aligning one or more antennas of a wearable computing device with at least one satellite, a wearer may need to adjust the pitch, roll, and/or yaw of the arm on which they are wearing the wearable computing device to align the wearable computing with a target orientation. To aid the alignment of the wearable computing device with one or more satellites, the wearable computing device may display a user interface showing how the wearer needs to move their arm to align the wearable computing device with a target orientation that includes a target azimuth and a target altitude. As the wearable computing device is moved, the wearable computing device may update the user interface based on the movement, showing whether the wearable computing device needs to be further moved to align the wearable computing device with one or more satellites. In this way, the user is assisted in performing a technical task of aligning an orientation of a wearable computing device with a target orientation by means of a guided process of human-machine interaction. Once the current and target orientations are aligned, the wearable computing device communicates with the satellite. This approach may enable a wearer of the wearable computing device to more easily align the wearable computing device with a satellite without needing to cease wearing the wearable computing device, which may reduce user frustration while establishing a connection to a satellite communication network. Moreover, since some wearable devices automatically lock when not being worn, the present disclosure may enable a wearer of the wearable computing device to align the wearable computing device with a satellite without first needing to unlock the wearable computing device.

In an example, a method includes, while a wearable computing device is being worn by a wearer: receiving, by the wearable computing device, a request to connect the wearable computing device to a non-terrestrial communication network; identifying, by the wearable computing device, a particular satellite associated with the non-terrestrial communication network based at least in part on a location of the wearable computing device and information regarding one or more satellite constellations of the non-terrestrial communication network, where each satellite constellation of the one or more satellite constellations includes a plurality of satellites; determining, by the wearable computing device and based on a current location of the particular satellite, a target orientation of the wearable computing device that includes a target azimuth of the wearable computing device and a target altitude of the wearable computing device; outputting, for display by the wearable computing device, a graphical user interface that includes a first set of visual elements that are indicative of one or more of the target azimuth of the wearable computing device relative to a current azimuth of an arm of the wearer of the wearable computing device, or the target altitude of the wearable computing device relative to a current altitude of the arm of the wearer of the wearable computing device; and responsive to determining that the wearable computing device is in the target orientation, transmitting, by the wearable computing device, data to the particular satellite.

In another example, a computing device includes one or more display components; a memory; and one or more programmable processors in communication with the memory, and configured to, while the wearable computing device is being worn by a wearer: receive a request to connect the wearable computing device to a non-terrestrial communication network; identify a particular satellite associated with the non-terrestrial communication network based at least in part on a location of the wearable computing device and information regarding one or more satellite constellations of the non-terrestrial communication network, where each satellite constellation of the one or more satellite constellations includes a plurality of satellites; determine, based on a current location of the particular satellite, a target orientation of the wearable computing device that includes a target azimuth of the wearable computing device and a target altitude of the wearable computing device; output, for display via the one or more display components, a graphical user interface that includes a first set of visual elements that are indicative of one or more of the target azimuth of the wearable computing device relative to a current azimuth of an arm of the wearer of the wearable computing device, or the target altitude of the wearable computing device relative to a current altitude of the arm of the wearer of the wearable computing device; and responsive to determining that the wearable computing device is in the target orientation, transmit data to the particular satellite.

In at least one example, computer-readable storage media is includes instructions that, encoded with instructions that, when executed, causes at least one processor of a wearable computing device worn by a wearer to: receive a request to connect the wearable computing device to a non-terrestrial communication network; identify a particular satellite associated with the non-terrestrial communication network based at least in part on a location of the wearable computing device and information regarding one or more satellite constellations of the non-terrestrial communication network, each satellite constellation of the one or more satellite constellations includes a plurality of satellites; determine, based on a current location of the particular satellite, a target orientation of the wearable computing device that includes a target azimuth of the wearable computing device and a target altitude of the wearable computing device; output, for display via one or more display components of the wearable computing device, a graphical user interface that includes a first set of visual elements that are indicative of one or more of the target azimuth of the wearable computing device relative to a current azimuth of an arm of the wearer of the wearable computing device, or the target altitude of the wearable computing device relative to a current altitude of the arm of the wearer of the wearable computing device; and responsive to determining that the wearable computing device is in the target orientation, transmit data to the particular satellite.

The details of one or more examples of the disclosure are set forth in the accompanying drawings and the description below. Other features, objects, and advantages will be apparent from the description and drawings, and from the claims.

### BRIEF DESCRIPTION OF DRAWINGS

FIG. 1 illustrates an example computing system that includes a wearable computing device that communicates via a non-terrestrial cellular communication system, in accordance with one or more techniques of this disclosure.
FIG. 2 illustrates an example wearable computing device that communicates via a non-terrestrial communications network, in accordance with techniques of this disclosure.
FIGS. 3A-3D illustrate example graphical user interfaces displayed by a wearable computing device, in accordance with techniques of this disclosure.
FIG. 4 is a flow chart that illustrates an example operation of a wearable computing device to, in accordance with techniques of this disclosure.

Like reference characters denote like elements throughout the text and figures.

### DETAILED DESCRIPTION

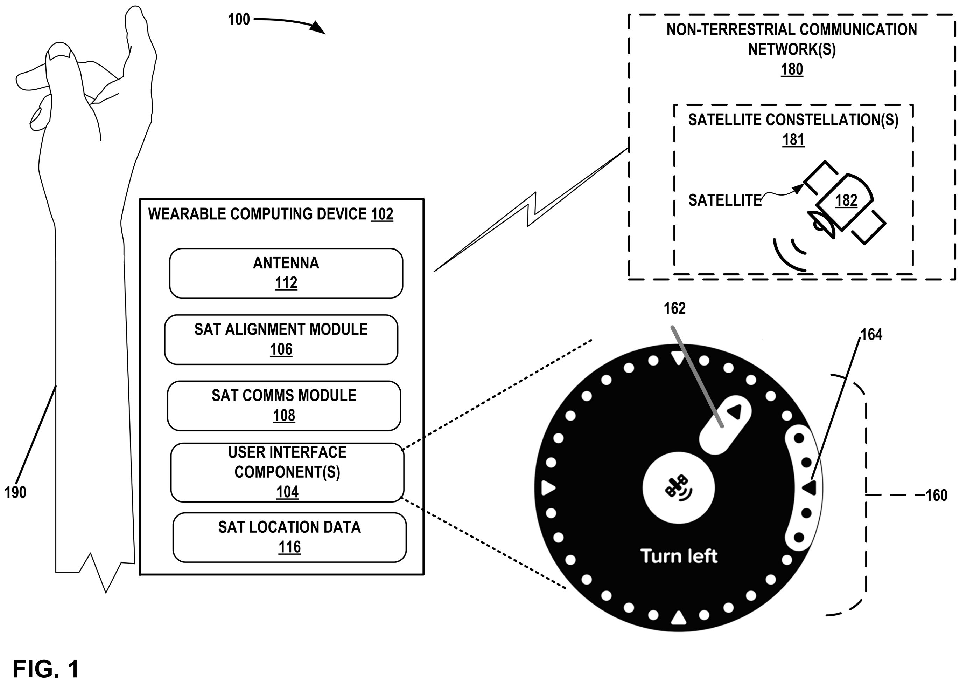

FIG. 1 illustrates an example computing system that includes a wearable computing device that communicates via a non-terrestrial cellular communication system, in accordance with one or more techniques of this disclosure. In the example of FIG. 1, computing system 100 includes wearable computing device 102 and non-terrestrial communications networks 180.

Wearable computing device 102 may be one or more types of computing device that may be worn by a user (alternatively referred to as the "wearer" throughout). Wearable computing device 102 may be one or more types of wearable computing device, such as a smartwatch, fitness tracker, artificial intelligence (AI)-enabled goggles/glasses, augmented reality (AR) glasses/goggles, virtual reality (VR) glasses/goggles, AI-enabled pin, and/or other type of wearable computing device. In some examples, wearable device 102 may include handheld devices, such as smartphones. A user of wearable computing device 102 may wear wearable computing device 102 at one or more locations on their body, such as on an arm, leg, head, or other portion of the body of a wearer. In the example of FIG. 1, wearable computing device 102 is shown as being worn on arm 190 of the wearer.

Wearable computing device 102 includes user interface components 104 (hereinafter "UIC 104"). UIC 104 may include one or more components of wearable computing device 102 that enable a wearer to interact with and receive output from wearable computing device 102. UIC 104 may include one or more input and output devices such as displays, touchscreens, speakers, microphones, haptic engines, LED indicators, projected keyboards, buttons, rotatable components (e.g., rotating bezels on a smartwatch), and/or other components. UIC 104 may enable a wearer to interact with wearable device 102 and request that wearable device 102 transmit messages via one or more networks.

Wearable device 102 includes antenna 112. Antenna 112 may include one or more antennas that enable wearable device 102 to transmit and receive data over one or more wavelengths and using one or more communication standards, such as 5G, 4G, long-term evolution (LTE), and one or more satellite communication standards (e.g., L-band based communications). For example, one or more components of wearable device 102, such as satellite communication module 108, may use antenna 112 to transmit a message to non-terrestrial communications networks 180.

Non-terrestrial communication networks 180 may include one or more communication networks that are at least partially non-terrestrial. Non-terrestrial communication networks 180 may include one or more communication networks with non-terrestrial devices or systems, such as high-altitude balloons, aircraft, unmanned aerial vehicles (UAVs), spacecraft, and/or satellites, in addition to terrestrial components, such as ground stations and interconnections to terrestrial network. For example, non-terrestrial communication networks 180 may be a network that includes high-altitude balloons in communication with terrestrial base stations that connect the balloons with terrestrial cellular networks.

Non-terrestrial communication networks 180 include one or more of satellite constellations 181. Satellite constellations 181 may include one or more constellations of satellites in communication with each other and in communication with one or more terrestrial stations. For example, a satellite constellation of satellite constellations 181 may include a plurality of satellites, such as satellite 182. Satellite constellations 181 may include one or more mega-constellations of satellites in low Earth orbit (LEO) that enable cellular communications across a portion or an entirety of the globe.

Satellite constellations 181 include one or more satellites, such as satellite 182. Satellite 182 may be a satellite with terrestrial and non-terrestrial communication capabilities. For example, satellite 182 may include a transceiver that enables satellite 182 to communicate with other non-terrestrial devices (e.g., other satellites of satellite constellations 181) and terrestrial devices (e.g., ground stations, wearable computing device 102, etc.).

In the example of FIG. 1, wearable computing device 102 may communicate via non-terrestrial cellular communication networks, such as one or more of non-terrestrial communication networks 180. Wearable computing device 102 may send and receive data via non-terrestrial communication networks 180. For example, wearable computing device 102 may send a text message via satellite 182 of non-terrestrial communication networks 180.

Wearable device 102 includes satellite communications module 108 (illustrated as "SAT COMMS MODULE 108" in FIG. 1, hereinafter "SCM 108"). SCM 108 may be a software component of wearable computing device 102, such as a plugin, process, module, executable, or other type of software component, that facilitates communication between wearable computing device 102 and one or more of satellites 182 of satellite communications network 180. For example, SCM 108 may facilitate the generation of a message and the transmission of the data of the message to a satellite of satellite 182. SCM 108 may cause wearable computing device 102 to transmit data, such as a text message, to satellite communications network 180.

Wearable computing device 102 may transmit and receive data that includes messages, such as a text message. Wearable computing device 102 may send data that includes text of message, emergency contact information, location data, a request for emergency assistance (e.g., an "SOS"), and/or other information. Wearable computing device 102 may send messages that include prepackaged information generated by wearable computing device 102. For example, during a setup process wearable computing device 102 may ask a user/wearer for emergency contact information that includes emergency contacts, any medical conditions of the wearer, and other information that may be sent in case of an emergency.

Wearable computing device 102 may transmit or receive data from non-terrestrial communication networks 180 in response to receiving an indication to transmit or receive data and/or when wearable computing device 102 is unable to transmit over a terrestrial cellular network. Wearable computing device 102 may receive data from UIC 104 consistent with the wearer of wearable computing device 102 requesting that wearable computing device 102 send a message and determine that SCM 108 should transmit data to satellite communications network 180. In an example, wearable computing device 102 receives an indication via UIC 104 that the wearer wishes to send an emergency message. Wearable computing device 102 determines there is insufficient signal strength to transmit the emergency message via a terrestrial cellular network and that the emergency should be sent via a satellite of non-terrestrial communication networks 180. Wearable computing device 102 may determine that wearable computing device 102 should connect to non-terrestrial communication networks 180 in order to receive a message. For example, wearable computing device 102 may determine a predetermined period of time has elapsed since the sending of an emergency message and that wearable computing device 102 should reconnect to non-terrestrial communication networks 180 to receive a response.

Wearable computing device 102 includes satellite alignment module 106 (illustrated as "SAT ALIGNMENT MODULE 106" in FIG. 1, hereinafter "SAM 106"). SAM 106 may be a software component of wearable computing device 102, such as a plugin, process, module, executable, or other type of software component, that assists a wearer in aligning wearable computing device 102 with one or non-terrestrial transceivers. For example, SAM 106 may enable a wearer of wearable computing device 102 to align wearable computing device with a location of satellite 182.

SAM 106 may identify a satellite 182 of satellite constellations 181 with which to establish a communication session. SAM 106 may use information, such as satellite location data 116 (illustrated as "SAT LOCATION DATA 116" in FIG. 1) regarding the current location of satellites to select one or more satellites to communicate with. Satellite location data 116 may include information regarding one or more satellite constellations included in satellite communications network 180 and the orbits of satellites 182. For example, satellite location data 116 may be a data repository of wearable computing device 102 that includes information regarding the current orbits of satellites 182 and which signal bands each of satellites 182 uses to transmit and receive data. SAM 106 may use satellite location data 116 to compute and determine the current location of satellites 182 in their corresponding orbits. For example, SAM 106 may determine, based on the time of day, the current location of each satellite of satellites 182 along their corresponding orbit. SAM 106 may select a particular satellite from satellites 182 using the current location of wearable computing device 102. SAM 106 may compare the current location of wearable computing device 102 and the current locations of satellites 182 (e.g., the current point in orbit of each of satellites 182) to determine which satellites of satellites 182 are in view (e.g., not hidden beyond the curvature of the Earth, otherwise obscured, or at a sufficiently low altitude relative to the horizon that antenna 112 would have insufficient signal strength) of wearable computing device 102. In some examples, SAM 106 may scan the sky to identify satellites of satellites 182 with which wearable computing device 102 may communicate).

SAM 106 may facilitate the orientating of wearable computing device 102 (and by extension antenna 112) in an orientation that facilitates transmitting and receiving data from satellites 182 of satellite communications network 180. Due to the limitations of antenna 112, wearable computing device 102 may need to be orientated in a particular orientation in order to transmit and receive data from satellite constellations 181 of non-terrestrial communication networks 180. For instance, antenna 112 may transmit at a power level such that antenna 112 must be orientated within a limited degree of deviation from a target orientation in order to transmit and receive data from satellites 182 or non-terrestrial communication networks 180.

SAM 106 may determine a target orientation based on a location of a particular satellite of satellite constellations 181 in the sky above a wearer of wearable computing device 102. SAM 106 may determine the target orientation as an orientation in which antenna 112 is "aligned" at or otherwise oriented such that a region of a radiation pattern with the greatest amplitude of transmission power of antenna 112 is consistent with the location of the target satellite. In an example, antenna 112 radiates in a radiation pattern outwards from wearable computing device 102 with a particular region of greatest amplitude (e.g., output power). SAM 106 compares the relative direction from wearable computing device 102 in which antenna 112 radiates the particular region of greatest amplitude to the current location of a particular satellite. SAM 106 may determine the target orientation by processing the current location of wearable computing device 102 and the particular satellite to compute the target azimuth and altitude that would align wearable computing device 102 (and, by extension, antenna 112) with current location of the particular satellite.

A wearer of wearable computing device 102 may find it challenging to orientate wearable computing device 102 with a satellite of satellites 182. In addition, the wearer may find it annoying to stop wearing wearable computing device 102 in order to orientate wearable computing device 102 as necessary to communicate with a satellite. For example, a wearer may find it annoying and tedious to remove wearable computing device 102 from their wrist and manually orientate wearable computing device 102 while holding wearable computing device 102.

In accordance with the techniques of this disclosure, SAM 106 enables a wearer of wearable computing device 102 to orientate a portion of their body, such as arm 190 and by extension wearable computing device 102, in a target orientation consistent with the position of a satellite while wearing wearable computing device 102. Rather than requiring the wearer to remove wearable computing device 102 prior to orientating or "aligning" wearable computing device 102 at satellite 182, SAM 106 may enable the wearer of wearable computing device 102 to orientate wearable computing device 102 at satellite 182 while the wearer is wearing wearable computing device 102 on arm 190. SAM 106 may cause UIC 104 to output a graphical user interface (GUI) that includes visual instructions and/or indications to guide the wearer on how to align arm 190 and, by extension, a current orientation of wearable computing device 102 with a target orientation.

In some examples, SAM 106 may use physicality limitations of the wearer in determining the target orientation of arm 190 of the wearer. SAM 106 may use physicality limitations that include physical limitations of the wearer. For example, SAM 106 may use information regarding limitations on the range of motion of arm 190 to determine the target orientation and/or to identify the particular satellite (e.g., to avoid identifying a particular satellite that the wearer would not be physically capable of aligning wearable computing device 102 with). In addition, SAM 106 may determine the target orientation of arm 190 based on information regarding how wearable computing device 102 is worn on arm 190 of the wearer. For example, SAM 106 may use information regarding which direction wearable computing device 102 is worn on arm 190 (e.g., for smartwatch, whether the crown is facing towards or away from the hand of the wearer) and which arm the wearer is wearing wearable computing device 102. SAM 106 may use the information regarding how wearable computing device 102 is worn to modify a target orientation of wearable computing device 102 to generate a target orientation of arm 190. In an example, SAM 106 uses the physicality limitations to determine that the wearer is wearing wearable computing device 102 such that antenna 112 is facing away from the hand of arm 190. SAM 106 modifies a target orientation so that the wearer is instructed to align arm 190 in an opposite direction compared to if antenna 112 was facing toward the hand.

SAM 106 may generate GUIs, such as GUI 160, to guide a wearer of wearable computing device 102 to align arm 190 with the target orientation. SAM 106 may generate GUIs that include one or more visual elements that are indicative of a current orientation of arm 190 of the wearer and a target orientation of arm 190. SAM 106 may generate GUIs that include indications of azimuth, altitude, or a combination of azimuth and altitude (e.g., an orientation in a spherical coordinate system) for both target and current azimuth/altitude/orientation. For instance, SAM 106 may generate instances of GUI 160 that guide the wearer to align either the azimuth or the altitude of arm 190 and then align the other component of the orientation, and/or may generate instances of GUI 160 that guide the wearer to simultaneously align the current azimuth and altitude of arm 190 with the target azimuth and altitude (e.g., the target orientation).

In the example of FIG. 1, SAM 106 generates GUI 160 as including current azimuth indicator 162 and target azimuth indicator 164. While not illustrated as such in FIG. 1, SAM 106 may generate GUI 160 as including visual indicators for target and current altitude and/or target and current orientation of arm 190. Current azimuth indicator 162 may be a visual element, such as an arrow, that indicates a current azimuth of arm 190 and, by extension, wearable computing device 102. Target azimuth indicator 164 may be a visual element that indicates the azimuth of the particular satellite relative to arm 190. SAM 106 may generate GUI instances of GUI 160 in which current azimuth indicator 162 and/or target azimuth indicator 164 may visually rotate or change relative location within GUI 160 as the azimuth of arm 190 changes. For example, SAM 106 may generate instances of GUI 160 in which current azimuth indicator 162 may visually rotate as the wearer of wearable computing device 102 rotates their arm to visually align current azimuth indicator 162 with target azimuth indicator 164. SAM 106 may periodically generate instances of GUI 160 to update the location and rotational orientation of current azimuth indicator 162 and/or target azimuth indicator 164.

SAM 106 may generate GUI 160 as including guidance for a wearer of wearable computing device 102 to align a current azimuth or a current altitude with a target azimuth or a target altitude, respectively. SAM 106 may generate GUI 160 as including one or more visual elements that include guidance for the wearer. For example, SAM 106 may generate GUI 160 as including a text field that includes textual instructions on how to align wearable computing device 102.

In some examples, SAM 106 may generate GUI 160 as including indications of connectivity or signal strength of a connection between wearable computing device 102 and non-terrestrial communication networks 180. SAM 106 may determine the signal strength of communications between a component of non-terrestrial communication networks 180 and antenna 112, such as signal strength of communications with satellite 182, and generate GUI 160 as including a visual indication of the signal strength. For example, SAM 106 may generate GUI 160 as changing color and increasing the size of a visual representation of satellite 182 as the signal strength increases.

SAM 106 may output GUIs, such as GUI 160, via one or more of UIC 104. SAM 106 may provide data regarding a GUI to UIC 104. UIC 104 may output the GUI for display via a display component of UIC 104. For example, SAM 106 may generate an instance of GUI 160 and provide the data regarding GUI 160 to UIC 104. UIC 104 may output the instance of GUI 160 for display.

In some examples, SAM 106 may cause another computing device to display information regarding the current orientation of wearable computing device 102 and the target orientation, such as an instance of GUI 160. SAM 106 may provide information regarding the current orientation and target orientation to another computing device for the computing device to display. For example, SAM 106 may provide information regarding GUI 160 to another computing device for display via a companion application executed by the computing device.

SAM 106 may generate and provide an indication that wearable computing device 102 is ready to transmit and/or receive data from non-terrestrial communication networks 180 to SCM 108 in response to determining that the current orientation of arm 190 is consistent with the target orientation. SCM 108 may cause wearable computing device 102 to transmit or receive data, such as data regarding a message of messages 114, in response to receiving the indication from SAM 106. In some examples, SCM 108 may transmit an indication that wearable computing device 102 is ready to receive data to satellite 182 of non-terrestrial communication networks 180 as part of receiving data from satellite communications network 180. SCM 108 may use antenna 112 to transmit and receive the data from non-terrestrial communication networks 180.

The techniques of this disclosure provide one or more practical benefits. The use of the current orientation of arm 190 may enable a wearer of wearable computing device 102 to avoid having to remove wearable computing device 102 from arm 190 in order to align wearable computing device 102 with the location of a satellite, such as satellite 182. In addition, the generation of GUIs, such as GUI 160, by SAM 106 may reduce wearer frustration in aligning an orientation of wearable computing device 102 with a target orientation and provide a more seamless and intuitive user experience. For instance, the generation of GUI 160 by SAM 106 may enable a wearer to intuitively align wearable computing device 102 for communication with a non-terrestrial communications network, such as a satellite communication network. In this way, GUI 160 can assist the user in performing a technical task of aligning an orientation of wearable computing device 102 with a target orientation by means of a guided process of human-machine interaction.

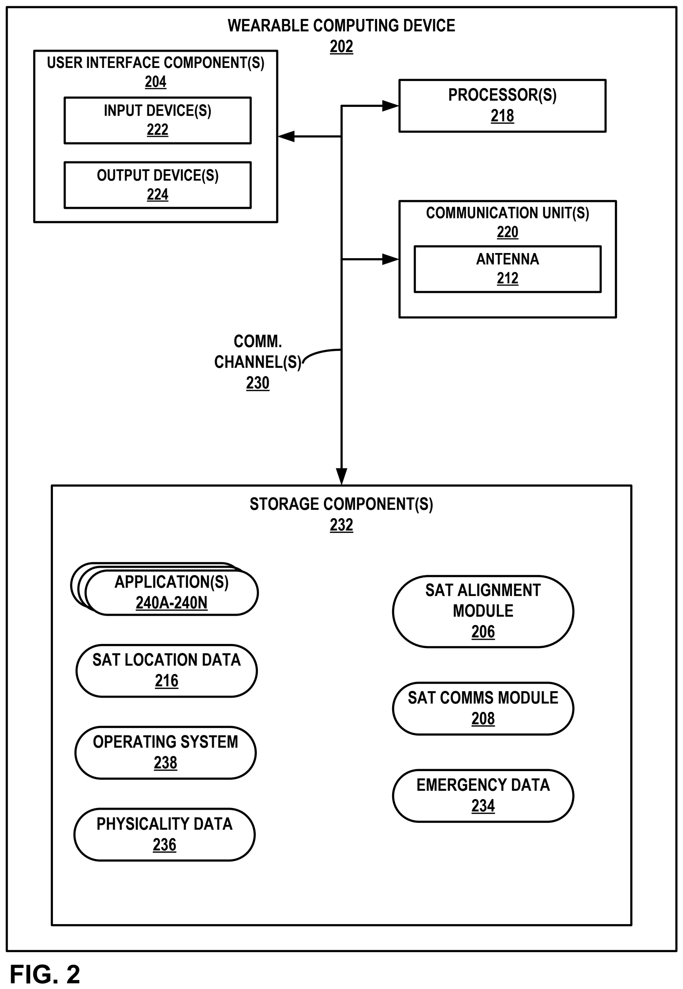

FIG. 2 illustrates an example wearable computing device 202 that communicates with a non-terrestrial communications network, in accordance with techniques of this disclosure. Wearable computing device 202 may be similar to wearable computing device 102 as illustrated in FIG. 1 and provide similar functionality.

Wearable computing device 202 includes one or more user interface components 204 (hereinafter "UIC 204"). UIC 204 may be similar to UIC 104 as illustrated in FIG. 1 and provide similar functionality. UIC 204 may include one or more input devices, such as input devices 222, and one or more output devices, such as output devices 224. Input devices 222 may include one or more devices capable of receiving input from a wearer of wearable computing device 202, such as touchscreen, mice, keyboards, and microphones, among other devices capable of receiving user input. Output devices 224 may include one or more devices capable of generating output, such as displays, speakers, haptic engines, and LED indicators, among other components. For example, output devices 224 may include a display that displays GUIs generated by wearable computing device 202.

Wearable computing device 202 may include one or more communications units 220. Wearable communication units 220 may include one or more components that enable communication with other computing devices, such as antennas (e.g., antenna 212), modems, radios, and network interfaces, among other components. Wearable computing device 202 may use one or more of communication units 220 to communicate via one or more networks, such as non-terrestrial communication networks and/or terrestrial cellular networks.

Communications units include antenna 212. Antenna 212 may be similar to antenna 112 as illustrated in FIG. 1 and provide similar functionality. For example, antenna 212 may include one or more antennas that enable wearable computing device 202 to communicate via one or more non-terrestrial communication networks (e.g., satellite constellations) and/or terrestrial cellular networks. Antenna 212 may enable wearable computing device 202 to transmit and receive data from one or more satellites that are part of a satellite constellation. For example, one or more software components executed by processors 218 may transmit data to a satellite using antenna 212.

Wearable computing device 202 includes one or more of processors 218. Processors 218 may include one or more types of processors and/or processing circuitry that includes mobile processors, desktop processors, integrated processors, reduced instruction set computer (RISC) processors, application processors, display controllers, sensor hubs, and/or any other hardware configured to function as a processing unit. Processors 218 may execute the instructions of one or more software components stored by storage components 232.

Wearable computing device 202 includes storage components 232. Storage components 232 may include one or more types of storage such as hard disk drives, solid state drives (e.g., SATA drives, NVMe drives, eMMC storage, etc.), magnetic tape drives, remote storage (e.g., cloud storage), and/or other types of storage. Storage components 232 may store information such as instructions and/or other data of software components of wearable computing device 202, such as an operating system of wearable computing device 202. For example, storage components 232 may include a non-transitory computer-readable storage medium encoded with instructions that, when executed, cause one or more of processors 218 to perform actions of one or more software components stored by storage components 232. Storage components 232 may include a computer program product that includes instructions that cause processors 218 to perform one or more actions of the instructions. For example, storage components 232 may include an external flash drive that includes the instructions of one or more software components of storage components 232.

Storage components 232 may include operating system 238 (hereinafter "OS 238") OS 238 may be an operating system of wearable computing device 202 that provides an execution environment for one or more software components of wearable computing device 202. For example, OS 238 may provide an execution environment for one or more applications of wearable computing device 202.

Storage components 232 include applications 240A-240N ("hereinafter "applications 240"). Applications 240 may include one or more applications executed by processors 218 that provide a variety of functionality for a wearer of wearable computing device 202. For example, an application of applications 240 may be a messaging application that enables the sending of messages via a satellite communications network.

Storage components 232 include emergency data 234. Emergency data 234 may be a data structure or other type of data storage that includes information regarding emergency communications. Emergency data 234 may include a list of emergency contacts of a wearer of wearable computing device 202, medical conditions of the wearer, and other information. Emergency data 234 may include information entered by the wearer prior to requesting emergency services. For example, wearable computing device 202 may prompt the wearer to enter information for emergency data 234 during a setup process of wearable computing device 202 and/or a setup process for messaging via non-terrestrial communication networks. In addition, wearable computing device 202 may prompt the wearer to enter information for emergency data 234 based on determining that the wearer is planning to travel in an area with limited terrestrial cellular service.

Storage components 232 include satellite communications module 208 (illustrated as "SAT COMMS MODULE 208" in FIG. 2, hereinafter "SCM 208"). SCM 208 may be similar to SCM 108 as illustrated in FIG. 1 and provide similar functionality. For example, SCM 208 may facilitate the transmission of one or more of messages 214 to non-terrestrial communication networks. SCM 208 may use one or more software and/or hardware components of wearable computing device 202, such as satellite alignment module 206, as part of facilitating the transmission of a message to non-terrestrial communication networks.

Storage components 232 include satellite alignment module 206 (illustrated as "SAT ALIGNMENT MODULE 206" in FIG. 2, hereinafter "SAM 206"). SAM 206 may be similar to SAM 106 as illustrated in FIG. 1 and provide similar functionality. For example, SAM 206 may guide a wearer of wearable computing device 202 to align a current orientation of their arm with a target orientation wearable computing device 202.

SAM 206 may identify one or more satellites with which to communicate using satellite location data 216 (illustrated as "SAT LOCATION DATA 216" in FIG. 1, hereinafter "SLD 216"). SLD 216 may be a data structure or other type of data storage that include information regarding non-terrestrial communication networks and one or more satellite constellations of the non-terrestrial communication networks that include a plurality of satellites. SLD 216 may include information stored locally in the memory of wearable computing device 202 and/or information obtained from a cloud or other computing device (e.g., a smartphone communicatively connected to wearable computing device 202). Wearable computing device 202 may periodically refresh information stored in SLD 216, such as when wearable computing device 202 is connected to a terrestrial network (e.g., WIFI or a terrestrial cellular network). SLD 216 may include information regarding the orbit of each satellite of the satellite constellations. SAM 206 may use information that includes the current time and the location of wearable computing device 202 to identify a particular satellite to communicate with. In an example, SAM 206 determines the current time and the location of wearable computing device 202. SAM 206 compares the current time and location to the orbits of the satellites of the satellite constellations to identify a satellite that is overhead (e.g., a satellite with line of sight to wearable computing device 202). Based on identifying the particular satellite, SAM 206 determines a target orientation of wearable computing device 202 that includes a target azimuth and a target altitude. SAM 206 may determine the target orientation by processing the current location of wearable computing device 202 and the current location of the particular satellite (e.g., the current position of particular satellite in the orbit of the particular satellite) to compute an azimuth and altitude of wearable computing device 202 that would align wearable computing device 202 with the particular satellite. SAM 206 may determine the target orientation based on the relative location of antenna 212 within wearable computing device 202. For example, SAM 206 may determine the target orientation such that antenna 212 is aligned with the particular satellite (e.g., such that an exterior side of wearable computing device that antenna 212 is located against is aligned at the particular satellite). SAM 206 may use additional information to determine the target orientation, such as physicality data 236.

In some examples, SAM 206 may use a proxy azimuth in determining the target orientation. SAM 206 may determine a proxy azimuth that is consistent with magnetic north and/or other direction (e.g., magnetic south). SAM 206 may determine the proxy azimuth to orientate wearable computing device 202 with a known direction prior to determining a target orientation. SAM 206 may determine the target orientation based on the proxy azimuth.

Storage components 232 include physicality data 236. Physicality data 236 may be a data structure or other type of data storage that includes information regarding general physical limitations of a typical wearer of wearable computing device 202 and/or particular physical limitations of the wearer of wearable computing device 202 and/or. Physicality data 236 may include information regarding general physical limitations such as general limitations on the range of motion of a typical human arm. In addition, physicality data 236 may include information regarding particular physical limitations of the wearer, such as information regarding a reduced range of motion of the arm of the wearer and information regarding how the wearer is wearing wearable computing device 202 (e.g., which arm the wearer is wearing wearable computing device 202 on, whether a crown of wearable computing device 202 is facing towards or away from a hand of the wearer, etc.). SAM 206 may use physicality information as part of determining the target orientation. In an example, SAM 206 identifies a first satellite and generates a target orientation that would require the wearer to hold their arm directly above their head. SAM 206 determines that the wearer would be unable to hold their arm in the target orientation above their head using physicality data 236. SAM 206 identifies a second satellite and determines a revised target orientation that does not require the wearer to hold their arm above their head.

SAM 206 may generate GUIs to guide the wearer of wearable computing device 202 to align the orientation of wearable computing device 202 with the target orientation. SAM 206 may generate GUIs that include one or more visual elements to guide the wearer to align wearable computing device 202. SAM 206 may generate a GUI that includes a first visual element indicative of a target azimuth and a second visual element indicative of a current azimuth of the arm of the wearer. SAM 206 may generate a GUI that includes a first visual element indicative of a target altitude and a second visual element indicative of a current altitude of the arm of the wearer. SAM 206 may display the target/current azimuths before the target/current altitude and vice versa. In some examples, SAM 206 may generate a GUI that includes visual elements indicative of a target orientation and current orientation that are combinations of azimuths and altitude.

SAM 206 may generate instances of a GUI updated based on a current orientation of the arm of the wearer. SAM 206 may generate instances of a GUI where the visual indicator indicative of current orientation is visually re-located based on the current orientation of the arm of the wearer and by extension wearable computing device 202. For example, SAM 206 may determine that a current azimuth of the arm has changed and generates an updated instance of a GUI with the visual indicator of the current azimuth visually shifted based on the updated azimuth. SAM 206 may cause wearable computing device 202 to output the instances of the GUI via output devices 224. SAM 206 may cause a display of output devices 224 to output the instances of the GUI for display. SAM 206 may generate updated instances of GUIs based on an updated orientation of the arm of the wearer when the orientation of the arm changes. For example, SAM 206 may generate a second GUI based on an updated orientation of the arm of the wearer.

SAM 206 may generate multiple instances of GUIs based on whether wearable computing device 202 is aligned. SAM 206 may generate a first GUI that includes a first of virtual elements. In addition, SAM 206 may generate a second graphical user interface that includes a second set of visual elements that are indicative of the target azimuth of the wearable computing device relative to a current azimuth of the arm of the wearer of the wearable computing device. SAM 206 may output the second graphical user interface for display via UIC 204. SAM 206 may generate a third GUI includes a third set of visual elements that are indicative of the target altitude of the wearable computing device relative to a current altitude of the arm of the wearer of the wearable computing device in response to determining that the current azimuth of the wearable computing device is consistent with the target azimuth SAM 206 may output the third GUI via UIC 204.

In some examples, SAM 206 may generate audio and/or haptic cues to guide a user of wearable computing device 202 to align an orientation of wearable computing device with a target orientation. SAM 206 may generate audio cues that include spoken instructions to align wearable computing device 202, cues that increase in volume/pitch as the current orientation of wearable computing device 202 more closely aligns with the target orientation (e.g., beeping that increases in volume and/or pitch), and/or other types of audio cues and cause output devices 224 to output the audio cues. SAM 206 may generate haptic cues that include vibration that changes in frequency and/or strength as the orientation of wearable computing device 202 is aligned with a target orientation and cause output devices 224 to output the haptic cues. SAM 206 may generate the audio and/or haptic cues in addition to or in lieu of a GUI.

SAM 206 may determine that the arm of the wearer and therefore wearable computing device 202 is aligned with a particular satellite and generate an indication for SCM 108. SAM 206 may determine that the arm of the wearer is within an acceptable range of the target orientation, such as within +/- 20 degrees of the target azimuth and +/- 10 degrees of the target altitude/elevation and therefore that wearable computing device 202 is aligned with the particular satellite. SAM 206 may generate the indication as an indication that wearable device 202 is aligned and ready to communicate with the particular satellite (or another device of a non-terrestrial network). SAM 206 may provide the indication to SCM 208. In an example, SAM 206 determines that the arm of the wearer is aligned with a target satellite and therefore antenna 212 is also aligned with the particular satellite. SAM 206 generates an indication that wearable computing device 202 is aligned and ready to transmit. SAM 206 provides the indication to SCM 208 for SCM 208 to initiate communications with the particular satellite.

In some examples, SAM 206 may identify a second satellite and generate a second GUI to guide the wearer to align their arm with the second satellite. SAM 206 may identify the second satellite in response to determining that wearable computing device 202 is unable to communicate with the first satellite. SAM 206 may determine, based on a current location of the second satellite, a second target orientation of wearable computing device 202 that includes a second target azimuth of wearable computing device 202 and a second target altitude of wearable computing device 202. SAM 206 may output the second GUI for display that includes second set of visual elements that are indicative of one or more of the second target azimuth of wearable computing device 202 relative to a current azimuth of the arm of the wearer of wearable computing device 202, the second target altitude of wearable computing device 202 relatively to a current altitude of the arm of the wearer. Wearable computing device 202 may transmit data to the second satellite responsive to determining that wearable computing device 202 is in the second target orientation.

SCM 208 may cause wearable computing device 202 to communicate with non-terrestrial devices and systems, such as a satellite. SCM 208 may cause wearable computing device 202 to communicate with a satellite in response to receiving an indication from SAM 206 that wearable computing device 202 is aligned according to a target orientation. As part of communicating with a satellite, SCM 208 may cause antenna 212 to transmit and receive data from the satellite. SCM 208 may cause antenna 212 to transmit data of an emergency message to a satellite. SCM 208 may receive data from a satellite in addition to transmitting data to the satellite. In an example, wearable computing device 202 receives input consistent with a request to receive information from a non-terrestrial communication network. SAM 206 identifies a particular satellite in response to receiving the input consistent with the request to receive information from the non-terrestrial communication network.

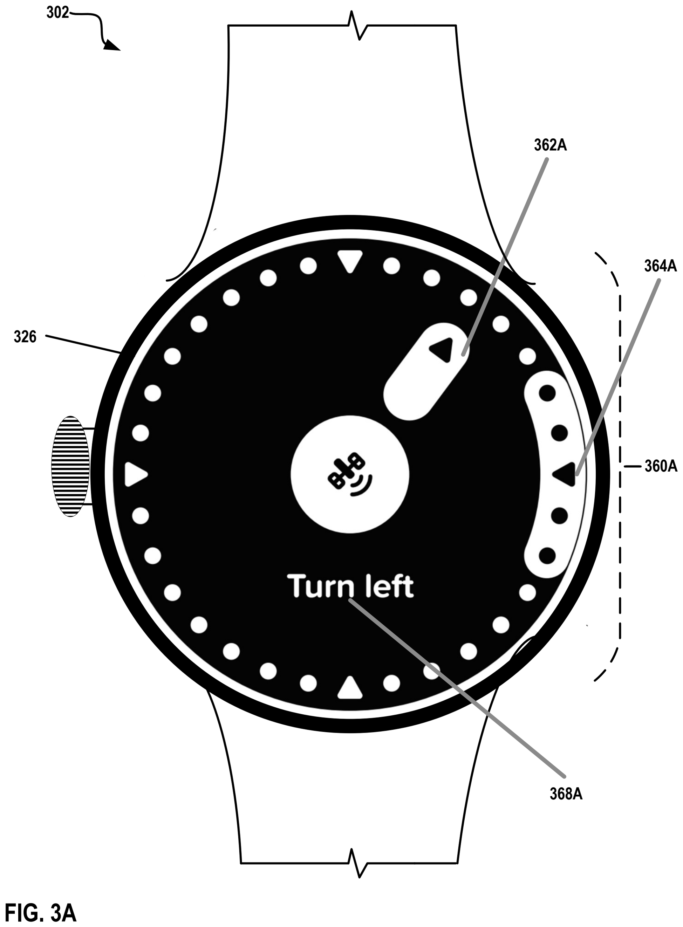

FIGS. 3A-3D illustrate example graphical user interfaces displayed by a wearable computing device 302, in accordance with techniques of this disclosure. For the purposes of clarity, FIGS. 3A-3D are described in the context of FIG. 1. For example, wearable computing device 302 may be similar to wearable computing device 102 and provide similar functionality.

In the example of FIG. 3A, wearable computing device 302 generates and displays GUI 360A to aid a wearer of wearable computing device 302 in aligning wearable computing device 302 with a satellite, such as satellite 182. Wearable computing device 302 may generate GUI 360A in response to the wearer indicating that they would like to communicate via a non-terrestrial communication network. Wearable computing device 302 may present an option to communicate via the non-terrestrial communication network in response to determining that wearable computing device 302 is unable to connect to a terrestrial cellular network. In an example, wearable computing device 302 determines that there is insufficient signal strength to communicate over a terrestrial cellular network. Wearable computing device 302 may generate a GUI that includes a visual indicator requesting approval to communicate via a non-terrestrial communication network from the wearer.

Wearable computing device 302 may present an option to communicate via a non-terrestrial communication network when an emergency is detected and there is insufficient terrestrial cell service. Wearable computing device 302 may detect that an emergency may have occurred via one or more sensors of wearable computing device 302 (e.g., using an accelerometer to detect that the wearer has fallen or that a car crash has occurred, receiving input consistent with the wearer indicating that an emergency has occurred, health metrics consistent with the wearer sustaining injury, etc.). Wearable computing device 302 may determine whether there is sufficient terrestrial cell service to communicate an emergency message in response to detecting an emergency. For example, wearable computing device 302 may attempt to send an emergency message by connecting to a terrestrial cell network and determine whether the message can be sent via a terrestrial cell network. In response to determining that there is insufficient terrestrial cell service, wearable computing device 302 may generate a GUI that includes a request to send the message via a non-terrestrial communication network. Wearable computing device 302 may output the GUI via display 326.

Wearable computing device 302 includes display 326. Display 326 may be a display of wearable computing device 302 similar to a display of UIC 104 and provide similar functionality. For example, display 326 may be an organic light emitting diode (OLED) touchscreen.

Wearable computing device 302 may identify a device or system, such as a satellite, of a non-terrestrial communication network to communicate with. Wearable computing device 302 may identify a particular satellite to communicate with based on current location of wearable computing device and information regarding one or more satellite constellations and the current locations of each satellite of the satellite constellations. For example, wearable computing device 302 may compare the current location of wearable computing device 302 to the location of one or more satellites in their corresponding orbits to identify a particular satellite to communicate with.

Wearable computing device 302 may determine a target orientation in response to identifying the particular satellite. Wearable computing device 302 may determine the target orientation using a spherical coordinate system such that the target orientation includes a target azimuth and a target altitude. For example, wearable computing device 302 may compute a target azimuth and a target altitude to determine the target orientation of wearable computing device 302.

Wearable computing device 302 may generate GUI 360A as including visual indications of a target orientation and a current orientation of wearable computing device 302. Wearable computing device 302 may generate GUI 360A as including a component of the target and current orientation (e.g., azimuth, altitude) or as including the entirety of the target orientation. For example, wearable computing device 302 may generate GUI 360A as including visual indicators for both azimuth and altitude.

In the example of FIG. 3A, wearable computing device 302 displays GUI 360A as including current azimuth indicator 362A, target azimuth indicator 364A, and status message 368A. Wearable computing device 302 may generate one or more instances of GUI 360A and output the instances for display via display 326.

Wearable computing device 302 may generate GUI 360A as including current azimuth indicator 362A to indicate the current azimuth of the wearer's arm and, by extension, wearable computing device 302 to a wearer. Wearable computing device 302 may generate current azimuth indicator 362A as a visual indicator with one or more visual elements indicative of the current azimuth, such as arrows, pointed elements, animated effects, and/or other visual indicators. In the example of FIG. 3A, wearable computing device 302 generates current azimuth indicator 362A as a five-sided figure with a point indicating the current azimuth of the arm of the wearer and wearable computing device 302.

Wearable computing device 302 may generate updated instances of GUI 360A with current azimuth indicator 362A visually rotated. Wearable computing device 302 may periodically determine the current azimuth of the arm of the wearer and update the rotational orientation of current azimuth indicator 362A in GUI 360A. In an example, wearable computing device 302 determines that the wearer has turned their arm 30 degrees to the left. Wearable computing device 302 generates an updated instance of GUI 360A with current azimuth indicator 362A visually rotated 30 degrees to the left within GUI 360A. Wearable computing device 302 outputs the updated instance of GUI 360 for display via display 326.

Wearable computing device 302 may generate GUI 360A as including one or more visual indicators of a target azimuth. In the example of FIG. 3A, wearable computing device 302 generates GUI 360A as including target azimuth indicator 364A to assist the user in aligning their arm with the target orientation. Wearable computing device 302 may generate target azimuth indicator 364A as including one or more visual elements such as a stylized image of a satellite, animated elements that change shape and color, and/or other visual elements. For example, wearable computing device 302 may generate target azimuth indicator 364A as including a line along a portion of the edge of display 326 that grows in size and changes color as the current orientation becomes closer to the target orientation.

Wearable computing device 302 may generate GUI 360A as including one or more indications of a connection status between wearable computing device 302 and the particular satellite. In the example of FIG. 3A, wearable computing device 302 generates GUI 360A as including status message 368A, where status message 368A as including the text "TURN LEFT". Wearable computing device 302 may generate updated instances of GUI 360A where status message 368A includes an updated status of wearable computing device 302 and/or instructions to a wearer (e.g., "ESTABLISHING CONNECTION", "TRANSMITTING", "SUCCESS", "FAILURE", "RECEIVING", "CONNECTION FAILED", "TURN RIGHT", etc.).

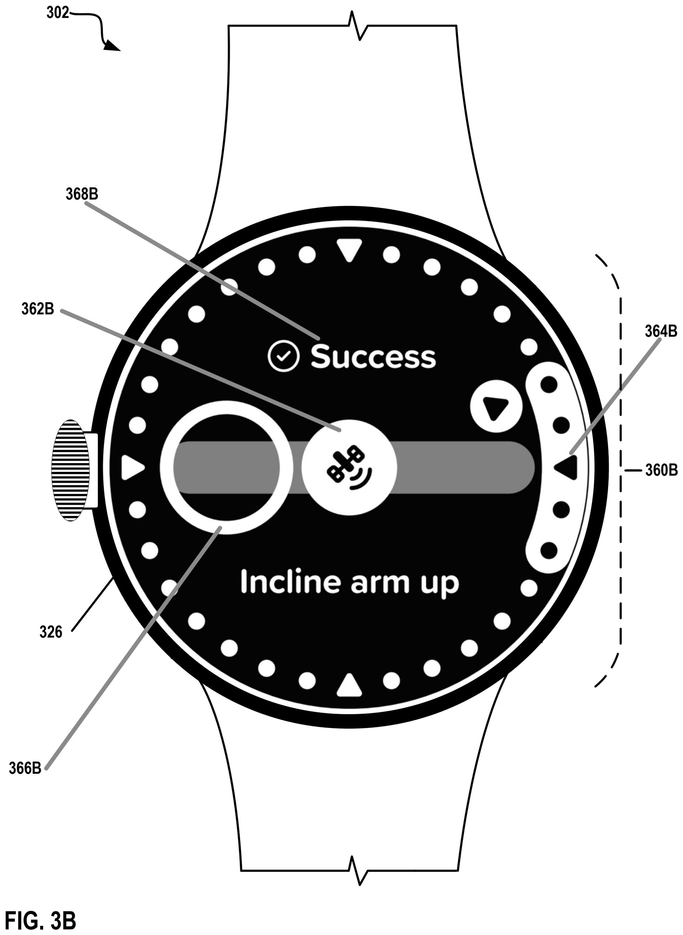

In the example of FIG. 3B wearable computing device 302 generates an updated GUI (e.g., GUI 360B) in response to determining that the current azimuth is aligned with the target azimuth and that the target altitude requires alignment with the current altitude. For example, wearable computing device 302 may generate GUI 360B as including different visual elements than GUI 360A in order to guide the wearer in aligning a current altitude with a target altitude. Wearable computing device 302 may generate one or more instances of GUI 360B and cause display 326 to output the instances of GUI 360B.

Wearable computing device 302 may generate GUI 360B as including current azimuth indicator 362B and target azimuth indicator 364B. Current azimuth indicator 362A may be similar to current azimuth indicator 362A as illustrated in FIG. 3A. For example, current azimuth indicator 362B may be a visual element generated by wearable computing device 302 that is indicative of a current azimuth of the arm of the wearer. Target azimuth indicator 364B may be similar to target azimuth indicator 364A as illustrated in FIG. 3A. For example, target azimuth indicator 364B may be a visual element generated by wearable computing device 302 to indicate a target azimuth of the arm of the wearer. Wearable computing device 302 may continue display current azimuth indicator 362B and target azimuth indicator 364B while guiding the wearer to align a current altitude with a target altitude so that the wearer does not unintentionally misalign the current azimuth with the target azimuth. Wearable computing device 302 may also generate GUI 360B as including target azimuth indicator 364B, which may be similar to target azimuth indicator 364A as illustrated in FIG. 3A.

Wearable computing device 302 may generate GUI 360B as including status message 368B. Status message 368B may be similar to status message 368A as illustrated in FIG. 3A. For example, status message 368B may display a status in text (e.g., "CONNECTING...", "ALIGNING ALTITUDE", "INCLINE ARM UP", "AIM ARM DOWN", "SUCCESS", ALTITUDE ALIGNED", etc.).

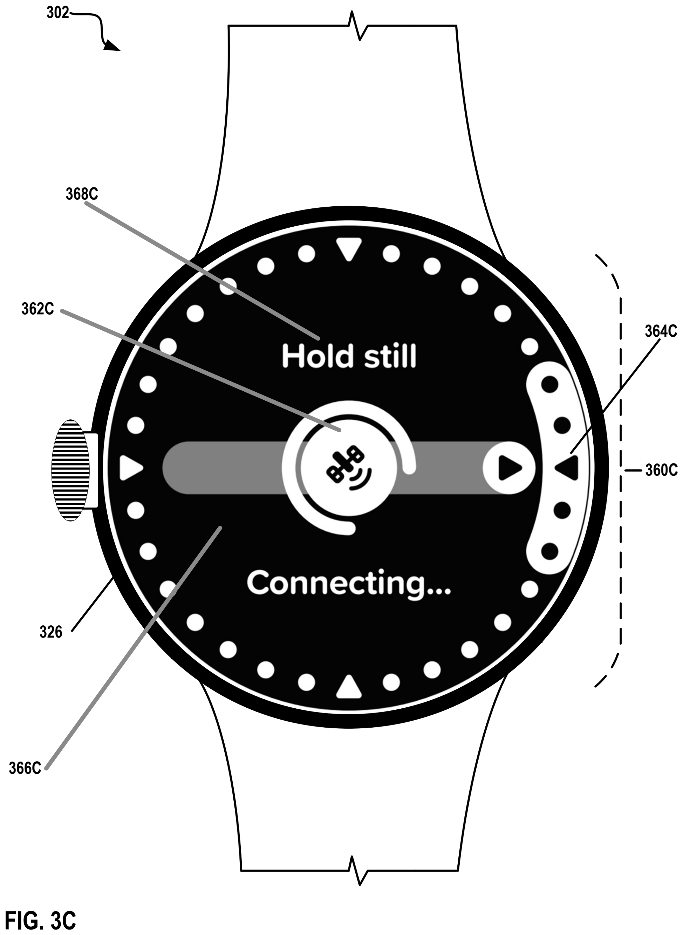

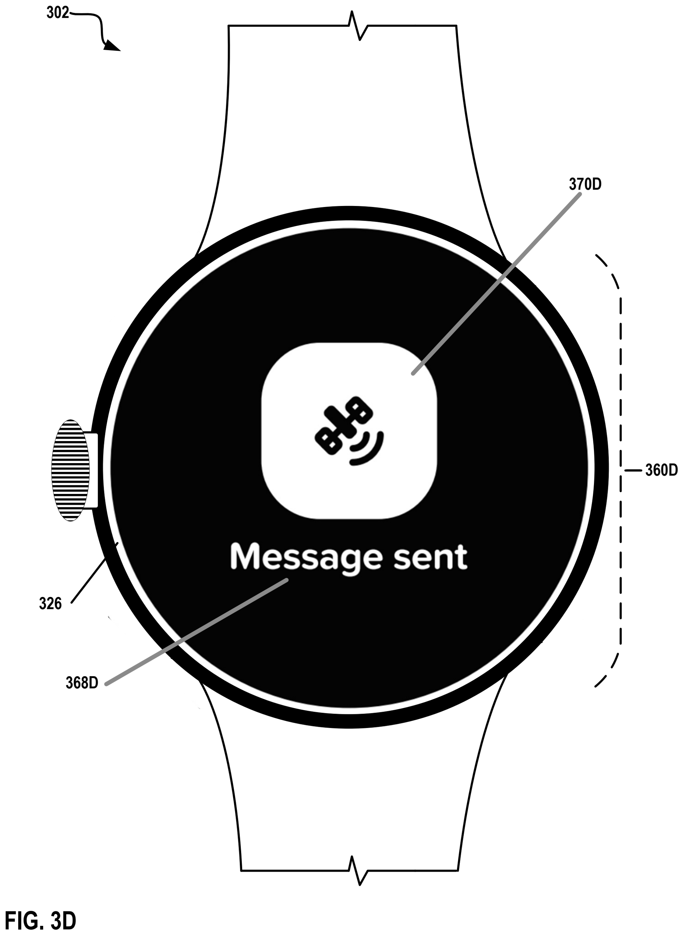

Wearable computing device 302 may generate GUI 360B as including current altitude indicator 366B. Current altitude indicator 366B may be a visual element that is indicative of a current altitude of the arm of the wearer. Wearable computing device 302 may generate current altitude indicator 366B as including one or more visual elements such as arrows, pointed elements, animated effects, and/or other visual indicators. In the example of FIG. 3, wearable computing device 302 generates current altitude indicator 366B as a hashed five-sided figure.

Wearable computing device 302 may use current azimuth indicator 362B as an indication of a target altitude. Wearable computing device 302 may guide the wearer to align current altitude indicator 366B with current altitude indicator 362B. In the example of FIG. 3, wearable computing device 302 guides the wearer to align the five-sided shape of current altitude indicator 366B with the inside of the five-sided figure of current azimuth indicator 362B. In some examples, wearable computing device 302 may generate GUI 360B as including a specific visual element indicative of the target altitude.

Wearable computing device 302 may generate instances of GUI 360B. Wearable computing device 302 may generate updated instances of GUI 360B as the wearer aligns the current altitude of their arm with the target altitude of wearable computing device 302. Wearable computing device 302 may generate instances of GUI 360B with one or more visual elements of GUI 360B visually changed or moved within GUI 360B. For example, wearable computing device 302 may generate updated instances of GUI 360B with current altitude indicator 366B visually shifted closer to current azimuth indicator 362B as the wearer more closely aligns the current and target altitudes.

Wearable computing device 302 may output the instances of GUI 360B for display via display 326. In an example, wearable computing device 302 generates an instance of GUI 360B. Wearable computing device 302 causes display 326 to output the instance of GUI 360B for display.

Wearable computing device 302 may generate updated instances of GUI 360B in response to determining that the azimuth of wearable computing device 302 is no longer aligned. Wearable computing device 302 may determine that, while requesting a user to align the altitude of wearable computing device 302, the azimuth of wearable computing device 302 is no longer aligned. Wearable computing device 302 may generate GUI 360B as including an indication to align the azimuth of computing device 302. For example, wearable computing device 302 may output or revert back to GUI 360A as illustrated in FIG. 3A.

In the example of FIG. 3C, wearable computing device 362 generates GUI 360C as an updated instance of a GUI, such as GUI 360B as illustrated in FIG. 3B. Wearable computing device 302 may generate GUI 360C as including one or more of the visual elements of GUI 360B visually altered.

Wearable computing device 362 may generate GUI 360C as including current altitude indicator 366C, where current altitude indicator 366C is an updated instance of current altitude indicator 366B. For instance, wearable computing device 362 may generate current altitude indicator 366C as visually shifted and/or altered within GUI 360C based on changes to the altitude of the arm of the wearer. In the example of FIG. 3C, wearable computing device 302 generates current altitude indicator 366C as shifted closer to current azimuth indicator 362C and as playing an animation as the wearer has moved the current altitude closer to the target altitude.

Wearable computing device 302 may generate GUI 360C as including one or more visual elements of GUI 360B. In the example of FIG. 3C, wearable computing device 302 generates GUI 360C as including target azimuth indicator 364C, and status message 368C. Target azimuth indicator 364C and status message 368C may be similar to or the same as target azimuth indicator 364B and status message 368B as illustrated in FIG. 3B, respectively.

Wearable computing device 302 may output instances of GUI 360C for display via display 326. Wearable computing device 302 may output the instances of GUI 360C for display to guide the wearer of wearable computing device 302 to align the current altitude with the target altitude. For example, wearable computing device 302 may output instances of GUI 360C that include one or more changes to the shape and location of current altitude indicator 366C as the wearer aligns the current altitude with the target altitude.

In the example of FIG. 3D, wearable computing device 302 generates GUI 360. Wearable computing device 302 may generate GUI 360D in response to determining that wearable computing device is aligned with a particular satellite and that a message has been sent to the particular satellite. In an example, wearable computing device 302 determines that wearable computing device 302 is aligned with a target orientation. Wearable computing device 302 transmits a message to a satellite in response to determining the wearable computing device 302 is aligned with the target orientation.

Wearable computing device 302 may generate GUI 360D as including a visual confirmation that the message was sent to the particular satellite or other device of a non-terrestrial communication network. Wearable computing device 302 may generate GUI 360D as including a visual indicator to provide confirmation to a wearer that a message was sent via the non-terrestrial communication network. In the example of FIG. 3, wearable computing device 302 generates GUI 360D as including status message 368D and confirmation indicator 370D.

Status message 368D may be a visual element of GUI 360D that includes text indicative of a status of wearable computing device 302. Status message 368D may be similar to status message 368A as illustrated in FIG. 3A, status message 368B as illustrated in FIG. 3B, and/or status message 368C as illustrated in FIG. 3C. For example, status message 368D may display the status "MESSAGE SENT" to indicate to a wearer that wearable computing device 302 has transmitted data that includes a message to a satellite of a non-terrestrial communication network.

Confirmation indicator 370D may be a visual element of GUI 360D that provides an indication of successful transmission or receipt of data from a non-terrestrial communication network. Confirmation indicator 370D may include one or more types of visual elements such as arrows, checkmarks, representations of satellites, emoticons (e.g., a thumbs-up emoji), animated elements, and/or other types of visual elements. In the example of FIG. 3D, confirmation indicator 370D is a checkmark that indicates the successful transmission of data that includes a message to a satellite.

Wearable computing device 302 may output GUI 360D for display via display 326. In an example, wearable computing device 302 determines that the arm of a wearer and, by extension, wearable computing device 302 is aligned with the target orientation. Wearable computing device 302 causes an antenna of wearable computing device 302 to transmit data that includes a message to a satellite of a non-terrestrial communication network in response to determining that the arm of the wearer is aligned with the target orientation. Wearable computing device 302 generates GUI 360D as including status message 368D and confirmation indicator 370D. Wearable computing device 302 outputs GUI 360 via display 326 for display.

While discussed in the context of first aligning the azimuth and then aligning the altitude, wearable computing device 302 may guide a user to first align a current altitude with a target altitude and then align a current azimuth with a target azimuth. For example, wearable computing device 302 may display GUI 360C and GUI 360B prior to displaying GUI 360A. In addition, wearable computing device 302 may revert back to GUI 360B to request a user realign a current altitude with a target altitude when the current and target altitudes become unaligned while the user is aligning the current and target azimuths.

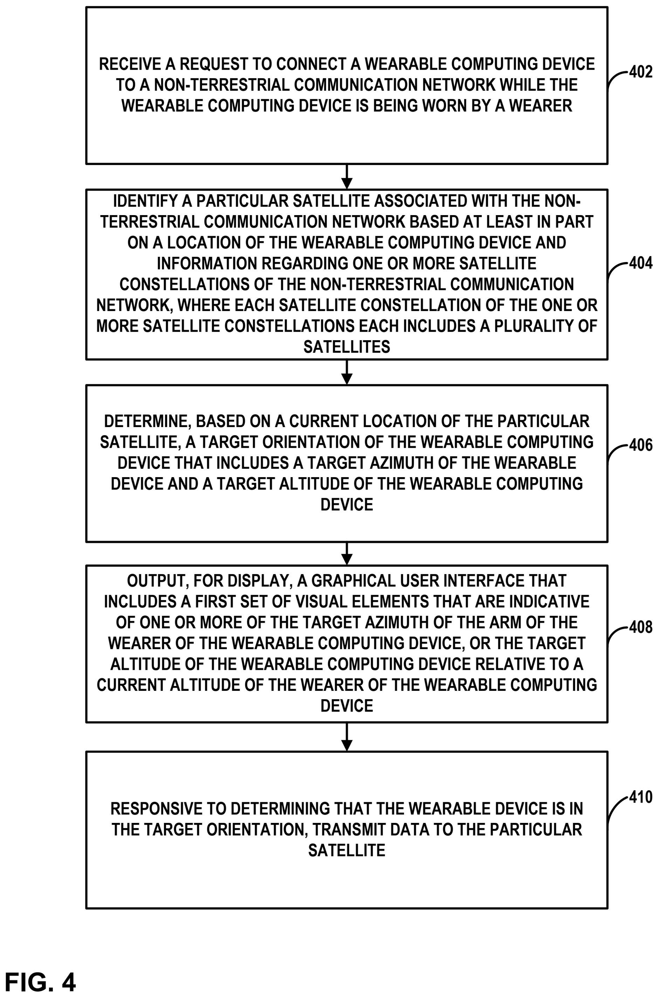

FIG. 4 is a flow chart that illustrates an example operation of a wearable computing device to, in accordance with techniques of this disclosure. For the purposes of clarity, FIG. 4 is described in the context of FIG. 1.

A wearable computing device, such as wearable computing device 102 receives a request to connect wearable computing device 102 to a non-terrestrial communication network, such as a non-terrestrial communication network of non-terrestrial communication networks 180, while wearable computing device 102 is being worn by a wearer (402). Wearable computing device 102 may receive the request via one or more components, such as a touchscreen. In some examples, wearable computing device 102 may receive the request from an application executed by wearable computing device 102. Wearable computing device 102 may be worn by the wearer on one or more appendages of the wearer, such as arm 190.

Wearable computing device 102 identifies a particular satellite, such as satellite 182, associated with a non-terrestrial communication network based at least in part on a location of wearable computing device 102 and information regarding one or more satellite constellations of non-terrestrial communication network 180, such as satellite constellations 181, where each satellite constellation of satellite constellations 181 includes a plurality of satellites (404). Wearable computing device 102 may use information regarding satellite constellations 181 stored by wearable computing device 102 to identify satellite 182. In an example, wearable computing device 102 compares the current location of wearable computing device 102 to information regarding the current orbits of satellites of satellite constellations 181. Wearable computing device 102 determines which satellites are currently overhead and visible from the location of wearable computing device 102. Wearable computing device 102 identifies satellite 182 from the satellites that are overhead and visible.

Wearable computing device 102 determines, based on a current location of wearable computing device 102 and based on a current location of satellite 182, a target orientation of wearable computing device 102 that includes a target azimuth of wearable computing device 102 and a target altitude of wearable computing device 102 (406). Wearable computing device 102 may determine the target orientation by processing the current location of wearable computing device 102 and the current location of satellite 182 to determine an orientation in a spherical coordinate system. In some examples, wearable computing device 102 may use information regarding physicality limitations of the user to determine the target orientation (e.g., use information regarding limitations on a range of motion of arm 190 to determine that the wearer would be unable to hold wearable device 102 in a first target orientation and compute a second target orientation).

Wearable computing device 102 outputs, for display, a graphical user interface, such as GUI 160, that includes a first set of visual elements that are indicative of one or more of the target azimuth of wearable computing device 102 relative to a current azimuth of arm 190 or the target altitude of wearable computing device 102 relative to a current altitude of arm 190 (408). Wearable computing device 102 may generate GUI 160 as including visual elements indicative of both the azimuth and altitude or indicative of one of the azimuth or altitude. For example, wearable computing device 102 may generate GUI 160 as including visual elements indicative of the current and target altitude, and then generate GUI 160 as including visual elements indicative of the current and target azimuth after the current and target altitude are aligned. In this way, the visual elements of GUI 160 can assist the user in performing a technical task of aligning an orientation of wearable computing device 102 with a target orientation by means of a guided process of human-machine interaction.

Responsive to determining that wearable computing device 102 is in the target orientation, wearable computing device 102 transmit data to satellite 182 (410). Wearable computing device 102 may transmit data that includes information, such as an emergency message, a request for any pending messages, and/or other information. For example, wearable computing device 102 may transmit data that includes text of an emergency message.

### Examples

Example 1: A method includes while a wearable computing device is being worn by a wearer: receiving, by the wearable computing device, a request to connect the wearable computing device to a non-terrestrial communication network; identifying, by the wearable computing device, a particular satellite associated with the non-terrestrial communication network based at least in part on a location of the wearable computing device and information regarding one or more satellite constellations of the non-terrestrial communication network, where each satellite constellation of the one or more satellite constellations includes a plurality of satellites; determining, by the wearable computing device and based on a current location of the particular satellite, a target orientation of the wearable computing device that includes a target azimuth of the wearable computing device and a target altitude of the wearable computing device; outputting, for display by the wearable computing device, a graphical user interface that includes a first set of visual elements that are indicative of one or more of the target azimuth of the wearable computing device relative to a current azimuth of an arm of the wearer of the wearable computing device, or the target altitude of the wearable computing device relative to a current altitude of the arm of the wearer of the wearable computing device; and responsive to determining that the wearable computing device is in the target orientation, transmitting, by the wearable computing device, data to the particular satellite.

Example 2: The method of example 1, wherein determining the target orientation of the wearable computing device is based on physicality limitations that include information regarding physical limitations of the wearer of the wearable computing device.

Example 3: The method of example 2, wherein the physicality limitations include information regarding a wear orientation indicative of a direction of how the wearable computing device is worn.

Example 4: The method of any of examples 1 through 3, wherein the first set of visual elements include guidance for the wearer of the wearable computing device to align the current azimuth of the arm of the wearer with the target azimuth and to align the current altitude of the arm of the wearer with the target altitude.

Example 5: The method of any of examples 1 through 4, wherein the graphical user interface is a first graphical user interface, and further includes responsive to determining that the wearable computing device is in the target orientation, generating, by the wearable computing device, a second graphical user interface that includes a visual confirmation that the wearable computing device is in the target orientation; and outputting, for display and by the wearable computing device, the second graphical user interface.

Example 6: The method of any of examples 1 through 5, wherein the graphical user interface is a first graphical user interface, and further includes generating, by the wearable computing device, a second graphical user interface, wherein the second graphical user interface includes a second set of visual elements that are indicative of the target azimuth of the wearable computing device relative to a current azimuth of the arm of the wearer of the wearable computing device; outputting, for display and by the wearable computing device, the second graphical user interface; responsive to determining that the current azimuth of the wearable computing device is consistent with the target azimuth, generating, by the wearable computing device, a third graphical user interface, wherein the third graphical user interface includes a third set of visual elements that are indicative of the target altitude of the wearable computing device relative to a current altitude of the arm of the wearer of the wearable computing device; and outputting, for display and by the wearable computing device, the third graphical user interface.

Example 7: The method of any of examples 1 through 6, wherein the data includes emergency information regarding the wearer of the wearable computing device.

Example 8: The method of any of examples 1 through 7, further includes receiving, by the wearable computing device, input consistent with a request to receive information from the non-terrestrial communication network, and wherein identifying the particular satellite is in response to receiving the input consistent with the request to receive information from the non-terrestrial communication network.

Example 9: The method of any of examples 1 through 8, wherein the information regarding the one or more satellite constellations is stored locally in a memory of the wearable computing device and includes information regarding a corresponding orbit for each satellite of the plurality of satellites of the one or more satellite constellations.

Example 10: The method of any of examples 1 through 9, wherein the particular satellite is a first satellite, wherein the target orientation is first target orientation, wherein the target azimuth is first target azimuth, wherein the target altitude is a first target altitude, wherein the graphical user interface is a first graphical user interface, and further includes identifying, by the wearable computing device, a second satellite associated with the non-terrestrial communication network; determining, by the wearable computing device and based on a current location of the second satellite, a second target orientation of the wearable computing device that includes a second target azimuth of the wearable computing device and a second target altitude of the wearable computing device; outputting, for display by the wearable computing device, a second graphical user interface that includes a second set of visual elements that are indicative of one or more of the second target azimuth of the wearable computing device relative to a current azimuth of the arm of the wearer of the wearable computing device, the second target altitude of the wearable computing device relatively to a current altitude of the arm of the wearer of the wearable computing device; and responsive to determining that the wearable computing device is in the second target orientation, transmitting, by the wearable computing device, data to the second satellite.

Example 11: The method of any of examples 1 through 10, further includes determining, by the wearable computing device, a proxy azimuth of the wearable computing device consistent with magnetic north, and wherein determining the target orientation is based on the proxy azimuth.

Example 12: The method of any of examples 1 through 11, wherein the graphical user interface is a first graphical user interface, and further includes generating, by the wearable computing device, a second graphical user interface based on an updated orientation of the arm of the wearer.

Example 13: A wearable computing device includes one or more display components; a memory; and one or more programmable processors in communication with the memory, and configured to, while the wearable computing device is being worn by a wearer: receive a request to connect the wearable computing device to a non-terrestrial communication network; identify a particular satellite associated with the non-terrestrial communication network based at least in part on a location of the wearable computing device and information regarding one or more satellite constellations of the non-terrestrial communication network, where each satellite constellation of the one or more satellite constellations includes a plurality of satellites; determine, based on a current location of the particular satellite, a target orientation of the wearable computing device that includes a target azimuth of the wearable computing device and a target altitude of the wearable computing device; output, for display via the one or more display components, a graphical user interface that includes a first set of visual elements that are indicative of one or more of the target azimuth of the wearable computing device relative to a current azimuth of an arm of the wearer of the wearable computing device, or the target altitude of the wearable computing device relative to a current altitude of the arm of the wearer of the wearable computing device; and responsive to determining that the wearable computing device is in the target orientation, transmit data to the particular satellite.

Example 14: The wearable computing device of example 13, wherein to determine the target orientation of the wearable computing device the one or more programmable processors are further configured to determine the target orientation of the wearable computing device based on physicality limitations that include information regarding physical limitations of the wearer of the wearable computing device.

Example 15: The wearable computing device of example 14, wherein the physicality limitations include information regarding a wear orientation indicative of a direction of how the wearable computing device is worn.

Example 16: The wearable computing device of any of examples 13 through 15, wherein the first set of visual elements include guidance for the wearer of the wearable computing device to align the current azimuth of the arm of the wearer with the target azimuth and to align the current altitude of the arm of the wearer with the target altitude.

Example 17: The wearable computing device of any of examples 13 through 16, wherein the graphical user interface is a first graphical user interface, and wherein the one or more programmable processors are further configured to: responsive to determining that the wearable computing device is in the target orientation, generate a second graphical user interface that includes a visual confirmation that the wearable computing device is in the target orientation; and output, for display, the second graphical user interface.

Example 18: The wearable computing device of any of examples 13 through 17, wherein the graphical user interface is a first graphical user interface, and wherein the one or more programmable processors are further configured to: generate a second graphical user interface, wherein the second graphical user interface includes a second set of visual elements that are indicative of the target azimuth of the wearable computing device relative to a current azimuth of the arm of the wearer of the wearable computing device; output, for display, the second graphical user interface; responsive to determining that the current azimuth of the wearable computing device is consistent with the target azimuth, generate a third graphical user interface, wherein the third graphical user interface includes a third set of visual elements that are indicative of the target altitude of the wearable computing device relative to a current altitude of the arm of the wearer of the wearable computing device; output, for display, the third graphical user interface.

Example 19: The wearable computing device of any of examples 13 through 18, wherein the data include emergency information regarding the wearer of the wearable computing device.

Example 20: A non-transitory computer-readable storage medium encoded with instructions that, when executed, causes at least one processor of a wearable computing device worn by a wearer to: receive a request to connect the wearable computing device to a non-terrestrial communication network; identify a particular satellite associated with the non-terrestrial communication network based at least in part on a location of the wearable computing device and information regarding one or more satellite constellations of the non-terrestrial communication network, each satellite constellation of the one or more satellite constellations includes a plurality of satellites; determine, based on a current location of the particular satellite, a target orientation of the wearable computing device that includes a target azimuth of the wearable computing device and a target altitude of the wearable computing device; output, for display via one or more display components of the wearable computing device, a graphical user interface that includes a first set of visual elements that are indicative of one or more of the target azimuth of the wearable computing device relative to a current azimuth of an arm of the wearer of the wearable computing device, or the target altitude of the wearable computing device relative to a current altitude of the arm of the wearer of the wearable computing device; and responsive to determining that the wearable computing device is in the target orientation, transmit data to the particular satellite.

Example 21: The non-transitory computer-readable storage medium of example 20, wherein the instructions further cause the at least one processor to perform any of the methods of examples 1-12.

Example 22: A computer program product comprising instructions that, when executed, cause one or more processors to perform any of the methods of examples 1-12.

For processes, apparatuses, and other examples or illustrations described herein, including in any flowcharts or flow diagrams, certain operations, acts, steps, or events included in any of the techniques described herein can be performed in a different sequence, may be added, merged, or left out altogether (e.g., not all described acts or events are necessary for the practice of the techniques). Moreover, in certain examples, operations, acts, steps, or events may be performed concurrently, e.g., through multi-threaded processing, interrupt processing, or multiple processors, rather than sequentially. Certain operations, acts, steps, or events may be performed automatically even if not specifically identified as being performed automatically. Also, certain operations, acts, steps, or events described as being performed automatically may be alternatively not performed automatically, but rather, such operations, acts, steps, or events may be, in some examples, performed in response to input or another event.

This description, in connection with the appended drawings, is intended as a description of various configurations and is not intended to represent the only configurations in which the concepts described herein may be practiced. The detailed description includes specific details for the purpose of providing a thorough understanding of the various concepts. However, it will be apparent to those skilled in the art that these concepts may be practiced without these specific details. In some instances, well-known structures and components are shown in block diagram form in order to avoid obscuring such concepts.

In accordance with the examples of this disclosure, the term "or" may be interrupted as "and/or" where context does not dictate otherwise. Additionally, while phrases such as "one or more" or "at least one" or the like may have been used in some instances but not others; those instances where such language was not used may be interpreted to have such a meaning implied where context does not dictate otherwise.

In one or more examples, the functions described may be implemented in hardware, software, firmware, or any combination thereof. If implemented in software, the functions may be stored, as one or more instructions or code, on and/or transmitted over a computer-readable medium and executed by a hardware-based processing unit. Computer-readable media may include computer-readable storage media, which corresponds to a tangible medium such as data storage media, or communication media including any medium that facilitates transfer of a computer program from one place to another (e.g., pursuant to a communication protocol). In this manner, computer-readable media generally may correspond to (1) tangible computer-readable storage media, which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can include RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Disk and disc, as used, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the terms "processor" or "processing circuitry" as used herein may each refer to any of the foregoing structures or any other structure suitable for implementation of the techniques described. In addition, in some examples, the functionality described may be provided within dedicated hardware and/or software modules. Also, the techniques could be fully implemented in one or more circuits or logic elements.

## Claims

1. A method, comprising:
while a wearable computing device is being worn by a wearer:
receiving, by the wearable computing device, a request to connect the wearable computing device to a non-terrestrial communication network;
identifying, by the wearable computing device, a particular satellite associated with the non-terrestrial communication network based at least in part on a location of the wearable computing device and information regarding one or more satellite constellations of the non-terrestrial communication network, where each satellite constellation of the one or more satellite constellations includes a plurality of satellites;
determining, by the wearable computing device and based on a current location of the particular satellite, a target orientation of the wearable computing device that includes a target azimuth of the wearable computing device and a target altitude of the wearable computing device;
outputting, for display by the wearable computing device, a graphical user interface that includes a first set of visual elements that are indicative of one or more of the target azimuth of the wearable computing device relative to a current azimuth of an arm of the wearer of the wearable computing device, or the target altitude of the wearable computing device relative to a current altitude of the arm of the wearer of the wearable computing device; and
responsive to determining that the wearable computing device is in the target orientation, transmitting, by the wearable computing device, data to the particular satellite.

2. The method of claim 1, wherein determining the target orientation of the wearable computing device is based on physicality limitations that include information regarding limitations on orientating the wearable computing device.

3. The method of claim 2, wherein the physicality limitations include information regarding a wear orientation indicative of a direction of how the wearable computing device is worn.

4. The method of any of claims 1 to 3, wherein the first set of visual elements include guidance for the wearer of the wearable computing device to align the current azimuth of the arm of the wearer with the target azimuth and to align the current altitude of the arm of the wearer with the target altitude.

5. The method of any of claims 1 to 4, wherein the graphical user interface is a first graphical user interface, and further comprising:
responsive to determining that the wearable computing device is in the target orientation, generating, by the wearable computing device, a second graphical user interface that includes a visual confirmation that the wearable computing device is in the target orientation; and
outputting, for display and by the wearable computing device, the second graphical user interface.

6. The method of any of claims 1 to 5, wherein the graphical user interface is a first graphical user interface, and further comprising:
generating, by the wearable computing device, a second graphical user interface, wherein the second graphical user interface includes a second set of visual elements that are indicative of the target azimuth of the wearable computing device relative to a current azimuth of the arm of the wearer of the wearable computing device;
outputting, for display and by the wearable computing device, the second graphical user interface;
responsive to determining that the current azimuth of the wearable computing device is consistent with the target azimuth, generating, by the wearable computing device, a third graphical user interface, wherein the third graphical user interface includes a third set of visual elements that are indicative of the target altitude of the wearable computing device relative to a current altitude of the arm of the wearer of the wearable computing device; and
outputting, for display and by the wearable computing device, the third graphical user interface.

7. The method of any of claims 1 to 6, wherein the data includes emergency information regarding the wearer of the wearable computing device.

8. The method of any of claims 1 to 7, further comprising:
receiving, by the wearable computing device, input consistent with a request to receive information from the non-terrestrial communication network, and wherein
identifying the particular satellite is in response to receiving the input consistent with the request to receive information from the non-terrestrial communication network.

9. The method of any of claims 1 to 8, wherein the information regarding the one or more satellite constellations is stored locally in a memory of the wearable computing device and includes information regarding a corresponding orbit for each satellite of the plurality of satellites of the one or more satellite constellations.

10. The method of any of claims 1 to 9, wherein the particular satellite is a first satellite, wherein the target orientation is first target orientation, wherein the target azimuth is first target azimuth, wherein the target altitude is a first target altitude, wherein the graphical user interface is a first graphical user interface, and further comprising:
identifying, by the wearable computing device, a second satellite associated with the non-terrestrial communication network;
determining, by the wearable computing device and based on a current location of the second satellite, a second target orientation of the wearable computing device that includes a second target azimuth of the wearable computing device and a second target altitude of the wearable computing device;
outputting, for display by the wearable computing device, a second graphical user interface that includes a second set of visual elements that are indicative of one or more of the second target azimuth of the wearable computing device relative to a current azimuth of the arm of the wearer of the wearable computing device, the second target altitude of the wearable computing device relatively to a current altitude of the arm of the wearer of the wearable computing device; and
responsive to determining that the wearable computing device is in the second target orientation, transmitting, by the wearable computing device, data to the second satellite.

11. The method of any of claims 1 to 10, further comprising:
determining, by the wearable computing device, a proxy azimuth of the wearable computing device consistent with magnetic north, and
wherein determining the target orientation is based on the proxy azimuth.

12. The method of any of claims 1 to 11, wherein the graphical user interface is a first graphical user interface, and further comprising:
generating, by the wearable computing device, a second graphical user interface based on an updated orientation of the arm of the wearer.

13. A wearable computing device, comprising:
one or more display components;
a memory; and
one or more programmable processors in communication with the memory, and configured to, while the wearable computing device is being worn by a wearer, perform the method of any of claims 1 to 12.

14. A computer program product comprising instructions that, when executed, cause one or more processors to perform the method of any of claims 1 to 12.

15. A non-transitory computer-readable storage medium encoded with instructions that, when executed, causes at least one processor of a wearable computing device worn by a wearer to perform the method of any of claims 1 to 12.
